# EUROPEAN PATENT SPECIFICATION

(11) **EP 2 207 400 B1**
(45) Date of publication and mention of the grant of the patent: **28.01.2015**
(21) Application number: 07845693.6
(22) Date of filing: 23.11.2007
(51) Int. Cl.: H04W 12/04, H04L 29/06, H04L 9/08, H04W 4/10, H04W 88/02, H04W 76/00

(54) **PTT DISPATCHING SYSTEM AND A KEY REMOTE-DESTROYING METHOD THEREOF**
PTT-ABFERTIGUNGSSYSTEM UND SCHLÜSSELFERNZERSTÖRUNGSVERFAHREN DAFÜR
SYSTÈME DE RÉPARTITION PTT ET PROCÉDÉ DE DESTRUCTION DE CLÉ À DISTANCE DE CELUI-CI

(30) Priority: 15.10.2007 CN 200710123860
(43) Date of publication of application: 14.07.2010
(73) Proprietor: ZTE Corporation, Shenzhen, Guangdong 518057 (CN)
(72) Inventor: WANG, Yan, Guangdong 518057 (CN)
(74) Representative: Hatzmann, Martin
(86) International application number: PCT/CN2007/003321
(87) International publication number: WO 2009/049447

(56) References cited:
- EP-A1- 1 826 984
- EP-A2- 1 355 251
- WO-A2-2005/036802
- CN-A- 101 022 608
- RU-C1- 2 307 475
- US-A1- 2003 065 934
- US-A1- 2004 042 438
- US-A1- 2006 121 927

## Description

### Filed of the Invention

The present invention relates to the field of Push To Talk, PTT, communication system, in particular to a PTT dispatching system and a key remote-destroying method thereof.

### Background of the Invention

The PTT communication system came out in the 1970s. The earliest PTT communication system was an analog system. Digital PTT techniques sprang up in the global range in the middle 1990s. The digital PTT network appeared in China in the late 1990s. The digital PTT communication techniques have the advantages of high utilization of communication channel and high system capacity, and thus have been widely used.

Two main services of PTT techniques are dispatching and group call. The dispatching function of PTT services refers to initiating a call to a certain number of terminals simultaneously to allow these terminals to participate in one call at the same time. The group call function of the PTT services refers to calling a group number at a communication terminal, wherein all the terminals in a group may be connected to one call simultaneously so as to achieve the effect of multi-person speaking at the same time. The terminals mentioned above can be either wired terminals or wireless terminals.

In practical applications, the military and the secret organization always have a requirement of encrypting a PTT call for part of the terminals, i.e.. the terminal without encryption authority, even if it is located in the group, can not be connected to a call, such that call privacy can be well ensured. Therefore, a terminal for encrypted call must be equipped with an encryption module that is responsible for encrypting and decrypting a call key. For the sake of security, if it is found that a certain terminal can not participate in the encryption call, a dispatching control side may also actively initiate a remote-destroying key to destroy the encryption module of the terminal.

In the prior art, however, there is not provided a technique in which the dispatching control terminal actively initiates a key remote-destroying to destroy the encryption module of the terminal, which will affect the safety of the call greatly.

EP 1826984 discloses an encrypted communication system, in which an encryption key for use in encrypted communication and settings information for the encrypted communication are distributed to each of a plurality of communication devices performing encrypted communication within a group, and in which traffic generated by distributing the encryption key and the like can be reduced. The encryption key at a communication device may be deleted responsive to a key information deletion request.

### Summary of the Invention

The main object of the present invention is to solve the problem of the prior art by providing a PTT dispatching system and a key remote-destroying method thereof, in which a dispatching control terminal may actively initiate a key remote-destroying to a PTT terminal, thereby improving safety of a PTT call.

In order to realize the object above, in the present invention there is used the following technical solutions:
a key remote-destroying method for a PTT dispatching system, wherein the PTT dispatching system performs call encryption management of a PTT terminal equipped with an encryption module, comprises the following steps:
   A1 the PTT dispatching system initiating a key remote-destroying request for a certain PTT terminal;
   B1 obtaining call information in correspondence with the PTT terminal according to the key remote-destroying request so as to establish a call channel with the PTT terminal;
   C1 generating a key remote-destroying instruction to destroy the encryption module of the PTT terminal; and
   D1 sending the key remote-destroying instruction to the PTT terminal so as to destroy the encryption module thereof,
   preferably, the key remote-destroying request carries the number information of the PTT terminal;
   and also comprises the following step:
E1 the PTT terminal executing the key remote-destroying instruction to its encryption module after receiving the key remote-destroying instruction.

The PTT dispatching system comprises a dispatch station server, a PTT Dispatch Server, PDS, and a PTT authentication server. The step B 1 includes the following substeps:
B11 the PDS sending a request for obtaining call information in response to the key remote-destroying request initiated by the dispatch station server for a certain PTT terminal, and the PTT Home Register, PHR, returning the call information in correspondence with the PTT terminal in response to the request for obtaining the call information; and
B12 the PDS establishing a call channel with the PTT terminal according to the call information.

The call information comprises user information and a call identification, wherein the user information including a global mobile user identifications and user's current position information.

The step B I I includes the following substeps:
B111 the PDS requesting user information from the PTT authentication server;
B112 the PDS first returning a key remote-destroying response to the dispatch station server after obtaining the user information returned by the PHR and then requesting the call identification from the PTT authentication server; and
B 113 the PHR returning the call identification to the PDS.

The PTT dispatching system further comprises a KDC, and the Step C1 includes the following substeps:
C11 the PDS sending a request for obtaining a key remote-destroying instruction to the KDC via the PTT authentication server; and
C12 the KDC generating a key remote-destroying instruction in response to the request for obtaining the remote-destroying instruction and returning it to the PDS via the PTT authentication server.

After the Step E1 there are also included the following steps:
F1 the PTT terminal returning a result of success or failure of key remote-destroying to the PTT dispatching system;
G1 the PTT dispatching system performing a dispatching terminal process according to the result returned by the PTT terminal;

The Step G1 includes the following substeps:
G11 the PDS receiving the result of key remote-destroying of the PTT terminal and sending a result acknowledge request to the KDC via the PTT authentication server;
G12 the KDC being responsive to the request for result acknowledge and determining whether to update an encryption user list according to the result of key remote-destroying;
G13 the KDC returning a result acknowledge response to the PDS via the PTT authentication server.

In order to realize the aforesaid purposes, in the present invention there is also used the following technical solution:
A PTT dispatching system for realizing key remote-destroying for a terminal comprises a dispatch station server, a dispatching system server, and a KDC; the dispatch station server is configured to initiate a key remote-destroying request for a certain PTT terminal; the dispatching system server is configured to obtain and inquire call information in correspondence with the PTT terminal according to the key remote-destroying request so as to establish a call channel with the PTT terminal; the KDC is configured to generate a key remote-destroying instruction for destroying an encryption module of said PTT terminal; and the dispatching system server is further configured to send the key remote-destroying instruction to the PTT terminal.

The dispatching system server comprises a PDS and a PTT authentication server; the PDS is configured to send a request for obtaining call information to the certain PTT terminal according to the key remote-destroying request, receive a call information returned by the PTT authentication server, and establish a call channel according to the call information; the PDS is further configured to a request for obtaining a key remote-destroying instruction to the KDC via the PTT authentication server; and the KDC is configured to return the key remote-destroying instruction to the PDS via the PTT authentication server.

The beneficial effects of the present invention are:
Since the PTT dispatching system can actively implement key remote-destroying to a PTT terminal that can not participate in an encrypted call in the present invention, the PTT terminal is controlled to destroy its equipped encryption module in response to the key remote-destroying instruction from the PTT dispatching system. If the PTT dispatching system at a dispatching control terminal finds that a certain terminal can not participate in the encryption call, the user terminal is no longer responsible for processing the encryption module thereof, and the PTT dispatching system can actively initiate a key remote-destroying instruction to destroy the encryption module of the PTT terminal. Therefore, such a key remote-destroying manner improves greatly the ability of the PTT dispatching system to manage an encrypted call of the PTT terminal in PTT communication, thereby improving the safety of the encrypted call.

### Brief Description of the Accompanying Drawings

Fig. 1 is a block diagram showing a network of a PTT communication system applied in an embodiment of the present invention.
Fig. 2 is a flow chart showing a key remote-destroying method for an embodiment of the present invention.

The characteristics and advantages of the present invention will be described in detail by the embodiments in combination with the accompanying drawings.

### Detailed Description of the Preferred Embodiments

In the present invention, when a certain PTT terminal managed by a PTT dispatching system can not participate in an encrypted call, the PTT dispatching system at the dispatching control terminal can actively initiate key remote-destroying of the PTT terminal and send an instruction to destroy the equipped encryption module thereof so as to realize safety management of the encrypted call.

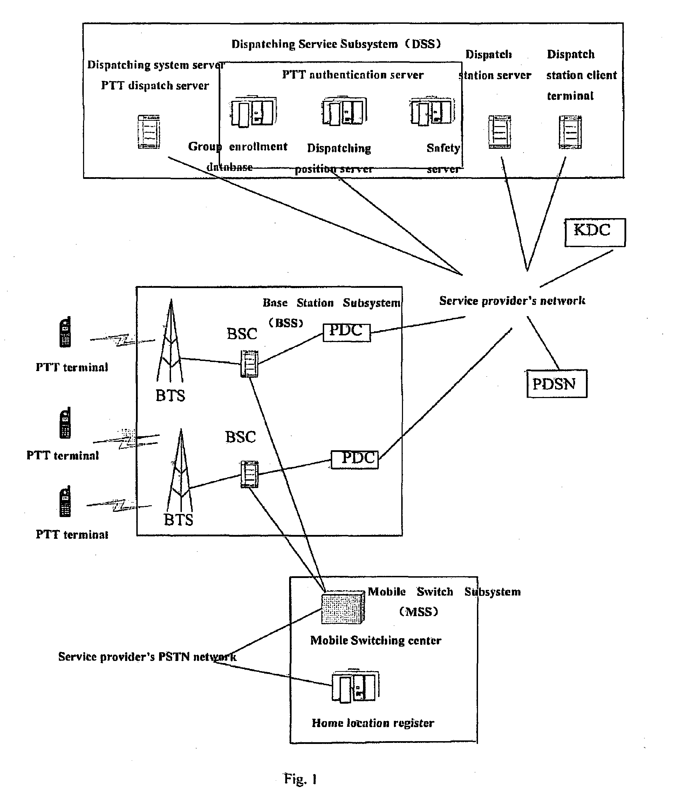

Referring to Fig. 1, the PTT communication system applied in the present embodiment comprises logical function modules such as a DSS (Dispatching Service Subsystem), a KDC (Key Distribution Center), a BSS (Base Station Subsystem), a switch subsystem, MSS, (Mobile Switch Subsystem), a PTT terminal, etc., wherein the DSS and the KDC constitute the PTT dispatching system in the present invention. The PTT terminal is coupled to the BSS via an air interface. The DSS and the KDC are coupled to the PTT terminal via the BSS, respectively.

The DSS comprises a dispatching system server and a dispatch station server, wherein the dispatching system server further comprises a PDS (PTT Dispatch Server) and a PHR (PTT Home Register) and is mainly responsible for accomplishing a PTT dispatching service.

The PDS is a master control point of a PTT call to accomplish processing a PTT dispatching call, including authenticating a PTT user, establishing various PTT calls such as private call and group call, judging a PTT request, etc. In addition, the PDS also receives PTT voice data from a reverse link and distributes it to a corresponding forward link according to call properties.

The PHR accomplishes functions of database management and configuration for providing a PTT user with group enrollment and group member enrollment as well as local information of the group member and service authority records of the group member, and functions of call statistics and call charging.

The KDC mainly realizes functions of generation, maintenance, and distribution of a key.

In the present embodiment, the dispatch station server is a side for initiating a key remote-destroying request for the PTT dispatching system and is responsible for actively initiating a key remote-destroying request for a certain terminal to the PDS.

The PDS is a master control point of a PTT call, which sends a request for obtaining call information of the PHR according to the key remote-destroying request, receives the call information returned by the PHR, and establishes a call channel according to user information and call identification thereof, wherein the user information includes global mobile user identification and a user's current position information. The PDS is also responsible for sending a request for obtaining a key remote-destroying instruction to the KDC after establishing the call channel and sending the received key remote-destroying instruction to the PTT terminal. Following a response from the PTT terminal, the PDS receives a key remote-destroying result returned by the PTT terminal, further sends a result acknowledge request to the KDC, and receives a result acknowledge response returned by the KDC after the KDC performs a corresponding process.

The PHR is responsible for processing a request of obtaining call information from the PDS, inquiring and returning call information containing user information and call identification to the PDS; it is responsible for transferring a request of obtaining a key remote-destroying instruction from the PDS to the KDC, and returning the key remote-destroying instruction provided by the KDC to the PDS; and in addition, it is also responsible for transferring a result acknowledge request from the PDS to the KDC, and returning a result acknowledge response of the KDC to the PDS.

The KDC is responsible for receiving a request of obtaining a remote-destroying instruction of the PDS, generating a remote-destroying instruction according to the request of obtaining the remote-destroying instruction, and sending to the PDS via the PHR; and it is also responsible for receiving a request for result knowledge, determining whether to update an encryption user list according to a remote-destroying result, and returning a result acknowledge response to the PDS.

The BSS mainly accomplishes a wireless access function of various PTT services, data services, and general phone services. The BSS is composed of a BTS (Base Transceiver System), a BSC (Base Station Controller), and a PDC (PTT Dispatch Controller), wherein the BTS accomplishes the functions of modulating and demodulating a baseband signal, receiving and transmitting a radio-frequency signal, etc. The BSC accomplishes the allocation of wireless resource, call process, power control, and supporting various switching functions of a terminal. The PDC accomplishes the allocation of wireless resource, dispatching call control, power control, supporting various switching functions of a PTT terminal in different coverage areas, and the aggregation and distribution of a PTT voice data stream.

The switch subsystem mainly accomplishes a phone interconnection service, a general phone call service, and part of value-added services. The switch subsystem is composed of a MSC (Mobile Switching Center), a HLR (Home Location Register), etc.

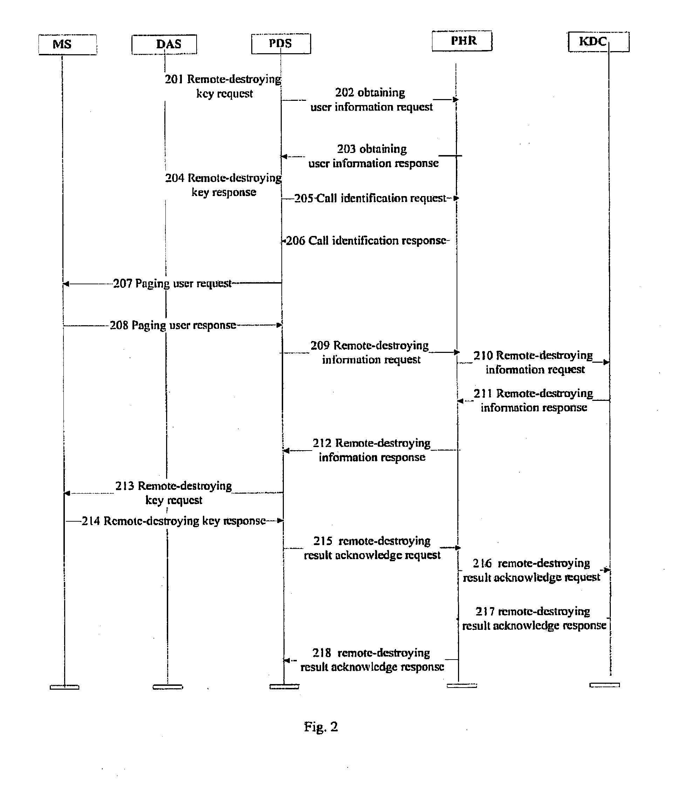

Referring to Fig. 2, in a PTT communication system, a process of key remote-destroying for a terminal initiated actively and accomplished by the PTT dispatching system at the dispatching control terminal is as follows:
step 201: the dispatch station server, DAS, of the dispatching control terminal actively initiates a key remote-destroying request for a certain PTT terminal to the PTT Dispatch Server, PDS, the request carries number information of the terminal;
step 202: after receiving the request, the PTT Dispatch Server, PDS requests the PHR for obtaining a user information, which includes global mobile user identification IMSI and a user's current position information;
step 203: the PTT authentication server, PHR, returns the user information response to the PTT Dispatch Server, PDS;
step 204: after receiving, the PTT Dispatch Server, PDS, first returns a key remote-destroying response to the dispatch station server DAS;
step 205: the PTT Dispatch Server, PDS, then requests the PTT authentication server, PHR, for user call identification GID;
step 206: the PHR generates the user call identification GID and returns a response to the PTT Dispatch Server, PDS;
step 207: the PTT Dispatch Server, PDS, initiates paging to the terminal by using the obtained call identification GID and user information, and establishes a service channel;
step 208: the PTT terminal returns a paging response to the PTT Dispatch Server, PDS;
step 209: the PTT Dispatch Server, PDS initiates a remote-destroying information request to the PHR, viz. requests to obtain a remote-destroying instruction for the encryption module of the PTT terminal;
step 210: the PTT authentication server, PHR, transfers the remote-destroying information request to the Key Distribution Center, KDC;
step 211: the Key Distribution Center, KDC generates a remote-destroying instruction for the encryption module of the terminal and returns a remote-destroying information response to the PTT authentication server, PHR;
step 212: the PHR transfers the remote-destroying information response to the PTT Dispatch Server, PDS;
step 213: after receiving the response, the PTT Dispatch Server, PDS initiates a key remote-destroying request to the terminal, the request carries the remote-destroying instruction for the encryption module of the terminal.
step 214: after receiving the key remote-destroying request, the terminal destroys its encryption module by using the remote-destroying instruction carried in the request, and then returns a response regarding whether the remote-destroying is successful to the PTT Dispatch Server, PDS;
step 215: the PTT Dispatch Server, PDS, sends a request for remote-destroying result acknowledge to PTT authentication server, PHR;
step 216: the PTT authentication server, PHR, transfers the request for remote-destroying result acknowledge to the Key Distribution Center, KDC;
step 217: after receiving the request, the Key Distribution Center, KDC updates the maintained user key and user encryption status in real time according to whether the remote-destroying result is successful, and then returns a remote-destroying result acknowledge response to the PTT authentication server, PHR; and
step 218: the PTT authentication server, PHR, transfers the remote-destroying result acknowledge response to the PTT Dispatch Server, PDS.

In the present invention, the encryption module of the terminal could be destroyed instantly, which ensures real-time privacy of an encrypted call. Certainly, besides an call encryption management service, the PTT communication system used in the present invention also provides a user not only with various PTT services of the PTT system but also with a traditional general phone service, a short message service, and a data service.

The contents above are further a detailed description of the present invention with reference to the preferred specific embodiments, which are not used to restrict the present invention. For those skilled in the art, the present invention may have various variations and alternations within principle of the present invention, which are all included in the scope of protection of the present invention.

## Claims

1. A key remote-destroying method performed by a Push To Talk, PTT dispatching system, wherein the PTT dispatching system performs call encryption management of a PTT terminal equipped with an encryption module, **characterized by** the following steps:
A1, initiating (201) a key remote-destroying request for a certain PTT terminal;
B1, obtaining (202) call information in correspondence with the PTT terminal according to the key remote-destroying request so as to establish a call channel with the PTT terminal;
C1, generating (211) a key remote-destroying instruction to destroy the encryption module of the PTT terminal; and
D1, sending (213) the key remote-destroying instruction to the PTT terminal so as to destroy the encryption module thereof.

2. The key remote-destroying method for the PTT dispatching system according to Claim 1, **characterized in that**, the key remote-destroying request carries the number information of the PTT terminal.

3. The key remote-destroying method for the PTT dispatching system according to Claim 1, **characterized by**, further comprising the following step:
E1, the PTT terminal executing (214) the key remote-destroying instruction to its encryption module after receiving the key remote-destroying instruction.

4. The key remote-destroying method for the PTT dispatching system according to Claim 1, **characterized in that**, the PTT dispatching system comprises a dispatch station server, a PTT Dispatch Server, PDS, and a PTT authentication server, and step B1 includes the following substeps:
B 11, the PDS sending (202) a request for obtaining call information in response to the key remote-destroying request initiated by the dispatch station server for a certain PTT terminal, and the PTT Home Register, PHR, returning (203) the call information in correspondence with the PTT terminal in response to the request for obtaining the call information; and
B12, the PDS establishing (207) a call channel with the PTT terminal according to the call information.

5. The key remote-destroying method for the PTT dispatching system according to Claim 4, **characterized in that**, the call information comprises user information and a call identification, wherein the user information includes a global mobile user identification and user's current position information, and the step B11 includes the following substeps:
B111, the PDS requesting (202) user information from the PTT authentication server;
B112, the PDS first returning (204) a key remote-destroying response to the dispatch station server after obtaining the user information returned by the PHR and then requesting (205) the call identification from the PTT authentication server; and
B113, the PHR returning (206) the call identification to the PDS.

6. The key remote-destroying method for the PTT dispatching system according to Claim 4, **characterized in that**, the PTT dispatching system further comprises a Key Distribution Center, KDC, and the step C1 includes the following substeps:
C11, the PDS sending (209) a request for obtaining a key remote-destroying instruction to the KDC via the PTT authentication server; and
C12, the KDC generating (211) a key remote-destroying instruction in response to the request for obtaining the remote-destroying instruction, and returning it to the PDS via the PTT authentication server.

7. The key remote-destroying method for the PTT dispatching system according to Claim 3, **characterized by**, comprising the following substeps after the step E1:
F1, the PTT terminal returning (214) a result of success or failure of key remote-destroying to the PTT dispatching system;
G1, the PTT dispatching system performing a dispatching terminal process according to the result returned by the PTT terminal.

8. The key remote-destroying method for the PTT dispatching system according to Claim 7, **characterized in that**, the step G1 comprising the following substeps:
G11, the PDS receiving (214) the result of key remote-destroying of the PTT terminal, and sending (215) a result acknowledge request to the KDC via the PTT authentication server;
G12, the KDC being responsive to the request for result acknowledge, and determining (217) whether to update an encryption user list according to the result of the key remote-destroying;
G13, the KDC returning (217) a result acknowledge response to the PDS via the PTT authentication server.

9. A Push To Talk, PTT, dispatching system for realizing key remote-destroying for a terminal, **characterized by**, comprising a dispatch station server, a dispatching system server, and a Key Distribution Center, KDC; **characterized in that** the dispatch station server is configured to initiate a key remote-destroying request for a certain PTT terminal; the dispatching system server is configured to obtain and inquire call information in correspondence with the PTT terminal according to the key remote-destroying request so as to establish a call channel with the PTT terminal; the KDC is configured to generate a key remote-destroying instruction for destroying an encryption module of the PTT terminal; and the dispatching system server is further configured to send the key remote-destroying instruction to the PTT terminal.

10. The PTT dispatching system according to Claim 9, **characterized in that**, the dispatching system server comprises a PTT Dispatch Server, PDS, and a PTT authentication server; the PDS is configured to send a request for obtaining call information to the certain PTT terminal according to the key remote-destroying request, receive a call information returned by the PTT authentication server, and establish a call channel according to the call information; the PDS is further configured to send a request for obtaining a key remote-destroying instruction to the KDC via the PTT authentication server; and the KDC is configured to return the key remote-destroying instruction to the PDS via the PTT authentication server.

## Patentansprüche

1. Schlüssel-Fernzerstörungs-Verfahren, das von einem Push-to-Talk-PTT-Abwicklungssystem durchgeführt wird, wobei das PTT-Abwicklungssystem eine Rufverschlüsselungsverwaltung eines PTT-Endgeräts durchführt, das mit einem Verschlüsselungsmodul ausgestattet ist, **gekennzeichnet durch** die folgenden Schritte:
A1: Initiieren (201) einer Schlüssel-Fernzerstörungs-Anforderung für ein bestimmtes PTT-Endgerät;
B1: Erhalten (202) von Rufinformation in Entsprechung zu dem PTT-Endgerät gemäß der Schlüssel-Fernzerstörungs-Anforderung, um so mit dem PTT-Endgerät einen Rufkanal einzurichten;
C1: Erzeugen (211) eines Schlüssel-Fernzerstörungsbefehls zum Zerstören des Verschlüsselungsmoduls des PTT-Endgeräts; und
D1: Senden (213) des Schlüssel-Fernzerstörungsbefehls an das PTT-Endgerät, um so dessen Verschlüsselungsmodul zu zerstören.

2. Schlüssel-Fernzerstörungs-Verfahren für das PTT-Abwicklungssystem gemäß Anspruch 1, **dadurch gekennzeichnet, dass** die Schlüssel-Fernzerstörungs-Anforderung die Zahleninformation des PTT-Endgeräts trägt.

3. Schlüssel-Fernzerstörungs-Verfahren für das PTT-Abwicklungssystem gemäß Anspruch 1, **dadurch gekennzeichnet, dass** es ferner den folgenden Schritt umfasst:
E1: das PTT-Endgerät führt den Schlüssel-Fernzerstörungsbefehl an seinem Verschlüsselungsmodul aus (214), nachdem es den Schlüssel-Fernzerstörungsbefehl empfangen hat.

4. Schlüssel-Fernzerstörungs-Verfahren für das PTT-Abwicklungssystem gemäß Anspruch 1, **dadurch gekennzeichnet, dass** das PTT-Abwicklungssystem einen Abwicklungsstationsserver, einen PTT-Abwicklungsserver, PDS, und einen PTT-Authentifizierungsserver umfasst, und dass Schritt B1 die folgenden Unterschritte beinhaltet:
B11: der PDS sendet (202) eine Anforderung zum Erhalten von Rufinformation als Antwort auf die Schlüssel-Fernzerstörungs-Anforderung, die von dem Abwicklungsstationsserver für ein bestimmtes PTT-Endgerät initiiert wurde, und das PTT-Heimatregister, PHR, gibt die Rufinformation in Entsprechung zu dem PTT-Endgerät als Antwort auf eine Anforderung zum Erhalten der Rufinformation zurück (203); und
B12: der PDS richtet einen Rufkanal mit dem PTT-Endgerät gemäß der Rufinformation ein (207).

5. Schlüssel-Fernzerstörungs-Verfahren für das PTT-Abwicklungssystem gemäß Anspruch 4, **dadurch gekennzeichnet, dass** die Rufinformation Benutzerinformation und eine Rufkennung umfasst, wobei die Benutzerinformation eine weltweite mobile Benutzerkennung und die aktuellen Positionsinformation des Benutzers beinhaltet und der Schritt B11 die folgenden Unterschritte beinhaltet:
B111: der PDS fordert Benutzerinformation von dem PTT-Authentifizierungsserver an (202);
B112: der PDS gibt zuerst eine Schlüssel-Fernzerstörungs-Antwort an den Abwicklungsstationsserver zurück (204), nachdem er die von dem PHR zurückgegebenen Benutzerinformation erhalten hat, und fordert dann die Rufkennung von dem PTT-Authentifizierungsserver an (205); und
B113: der PHR gibt die Rufkennung an den PDS zurück (206).

6. Schlüssel-Fernzerstörungs-Verfahren für das PTT-Abwicklungssystem gemäß Anspruch 4, **dadurch gekennzeichnet, dass** das PTT-Abwicklungssystem ferner ein Schlüsselverteilungscenter, KDC, umfasst, und der Schritt C1 die folgenden Unterschritte beinhaltet:
C11: der PDS sendet (209) eine Anforderung zum Erhalten eines Schlüssel-Fernzerstörungsbefehls an das KDC über den PTT-Authentifizierungsserver; und
C12: das KDC erzeugt (211) einen Schlüssel-Fernzerstörungsbefehl als Antwort auf die Anforderung zum Erhalten des Fernzerstörungsbefehls und gibt ihn über den PTT-Authentifizierungsserver an den PDS zurück.

7. Schlüssel-Fernzerstörungs-Verfahren für das PTT-Abwicklungssystem gemäß Anspruch 3, umfassend die folgenden Unterschritte nach Schritt E1:
F1: das PTT-Endgerät gibt ein Ergebnis eines Erfolgs oder Misserfolgs der Schlüssel-Fernzerstörung an das PTT-Abwicklungssystem zurück (214);
G1: das PTT-Abwicklungssystem führt einen Abwicklungs-Endgerät-Prozess gemäß dem von dem PTT-Endgerät zurückgegebenen Ergebnis durch.

8. Schlüssel-Fernzerstörungs-Verfahren für das PTT-Abwicklungssystem gemäß Anspruch 7, **dadurch gekennzeichnet, dass** der Schritt G1 die folgenden Unterschritte umfasst:
G11: der PDS empfängt (214) das Ergebnis der Schlüssel-Fernzerstörung des PTT-Endgeräts und sendet (215) eine Ergebnis-Bestätigungsanforderung über den PTT-Authentifizierungsserver an das KDC;
G12: das KDC reagiert auf die Anforderung zur Ergebnisbestätigung und bestimmt (217), ob eine Verschlüsselungsnutzerliste gemäß dem Ergebnis der Schlüssel-Fernzerstörung aktualisiert werden soll;
G13: das KDC gibt eine Ergebnisbestätigungsantwort über den PTT-Authentifizierungsserver an den PDS zurück (217).

9. Push-to-Talk-PTT-Abwicklungssystem zum Umsetzen einer Schlüssel-Fernzerstörung für ein Endgerät, umfassend einen Abwicklungsstationsserver, einen Abwicklungssystemserver und ein Schlüsselverteilungscenter, KDC, **dadurch gekennzeichnet, dass** der Abwicklungsstationsserver dazu konfiguriert ist, eine Schlüssel-Fernzerstörungs-Anforderung für ein bestimmtes PTT-Endgerät zu initiieren; der Abwicklungssystemserver dazu konfiguriert ist, Rufinformation in Entsprechung zu dem PTT-Endgerät gemäß der Schlüssel-Fernzerstörungs-Anforderung zu erhalten und nachzufragen, um so einen Rufkanal mit dem PTT-Endgerät einzurichten; das KDC dazu konfiguriert ist, einen Schlüssel-Fernzerstörungsbefehl zum Zerstören eines Verschlüsselungsmoduls des PTT-Endgeräts zu erzeugen; und der Abwicklungssystemserver ferner dazu konfiguriert ist, den Schlüssel-Fernzerstörungsbefehl an das PTT-Endgerät zu senden.

10. PTT-Abwicklungssystem gemäß Anspruch 9, **dadurch gekennzeichnet, dass** der Abwicklungssystemserver einen PTT-Abwicklungsserver, PDS, und einen PTT-Authentifizierungsserver umfasst; der PDS dazu konfiguriert ist, eine Anforderung zum Erhalten von Rufinformation an das bestimmte PTT-Endgerät gemäß der Schlüssel-Fernzerstörungs-Anforderung zu senden, eine von dem PTT-Authentifizierungsserver zurückgegebene Rufinformation zu empfangen und gemäß der Rufinformation einen Rufkanal einzurichten; der PDS ferner dazu konfiguriert ist, eine Anforderung zum Erhalten eines Schlüssel-Fernzerstörungsbefehls über den PTT-Authentifizierungsserver an das KDC zu senden; und das KDC dazu konfiguriert ist, den Schlüssel-Fernzerstörungsbefehl über den PTT-Authentifizierungsserver an den PDS zurückzugeben.

## Revendications

1. Méthode de destruction à distance de clé effectuée par un système de répartition Push To Talk, PTT, dans laquelle le système de répartition PTT effectue une gestion de chiffrement d'appel d'un terminal PTT équipé d'un module de chiffrement, **caractérisée par** les étapes suivantes :
Al, l'initiation (201) d'une demande de destruction à distance de clé pour un certain terminal PTT ;
B1, l'obtention (202) d'information d'appel en correspondance avec le terminal PTT selon la demande de destruction à distance de clé afin d'établir une voie d'appel avec le terminal PTT ;
C1, la génération (211) d'une instruction de destruction à distance de clé pour détruire le module de chiffrement du terminal PTT ; et
Dl, l'envoi (213) de l'instruction de destruction à distance de clé au terminal PTT afin de détruire le module de chiffrement de celui-ci.

2. Méthode de destruction à distance de clé pour le système de répartition PTT selon la revendication 1, **caractérisée en ce que** la demande de destruction à distance de clé achemine l'information de numéro du terminal PTT.

3. Méthode de destruction à distance de clé pour le système de répartition PTT selon la revendication 1, **caractérisée en ce qu'**elle comprend en outre l'étape suivante :
El, le terminal PTT exécutant (214) l'instruction de destruction à distance de clé sur son module de chiffrement après réception de l'instruction de destruction à distance de clé.

4. Méthode de destruction à distance de clé pour le système de répartition PTT selon la revendication 1, **caractérisée en ce que**, le système de répartition PTT comprend un serveur de station de répartition, un Serveur de répartition PTT, PDS, et un serveur d'authentification PTT, et l'étape B1 comprend les sous-étapes suivantes :
B11, le PDS envoyant (202) une demande pour obtenir une information d'appel en réponse à la demande de destruction à distance de clé initiée par le serveur de station de répartition pour un certain terminal PTT, et l'Enregistreur nominal PTT, PHR, retournant (203) l'information d'appel en correspondance avec le terminal PTT en réponse à la demande pour obtenir l'information d' appel ; et
B12, le PDS établissant (207) une voie d'appel avec le terminal PTT selon l'information d'appel.

5. Méthode de destruction à distance de clé pour le système de répartition PTT selon la revendication 4, **caractérisée en ce que**, l'information d'appel comprend une information d'utilisateur et une identification d'appel, dans laquelle l'information d'utilisateur comprend une identification d'utilisateur mobile mondiale et une information de position actuelle de l'utilisateur, et l'étape B11 comprend les sous-étapes suivantes :
B111, le PDS demandant (202) une information d'utilisateur au serveur d'authentification PTT ;
B112, le PDS retournant d'abord (204) une réponse de destruction à distance de clé au serveur de station de répartition après l'obtention de l'information d'utilisateur retournée par le PHR et demandant ensuite (205) l'identification d'appel au serveur d'authentification PTT ; et
B113, le PHR retournant (206) l'identification d'appel au PDS.

6. Méthode de destruction à distance de clé pour le système de répartition PTT selon la revendication 4, **caractérisée en ce que**, le système de répartition PTT comprend en outre un centre de distribution de clé, KDC, et l'étape C1 comprend les sous-étapes suivantes :
C11, le PDS envoyant (209) une demande pour obtenir une instruction de destruction à distance de clé au KDC via le serveur d'authentification PTT ; et
C12, le KDC générant (211) une instruction de destruction à distance de clé en réponse à la demande pour obtenir l'instruction de destruction à distance, et la retournant au PDS via le serveur d'authentification PTT.

7. Méthode de destruction à distance de clé pour le système de répartition PTT selon la revendication 3, **caractérisée en ce qu'**elle comprend les sous-étapes suivantes après l'étape E1 :
F1, le terminal PTT retournant (214) un résultat de réussite ou d'échec de destruction à distance de clé au système de répartition PTT ;
G1, le système de répartition PTT effectuant un procédé terminal de répartition selon le résultat retourné par le terminal PTT.

8. Méthode de destruction à distance de clé pour le système de répartition PTT selon la revendication 7, **caractérisée en ce que** l'étape G1 comprend les sous-étapes suivantes :
G11, le PDS recevant (214) le résultat de destruction à distance de clé du terminal PTT, et envoyant (215) une demande d'accusé de réception de résultat au KDC via le serveur d'authentification PTT ;
G12, le KDC réagissant à la demande d'accusé de réception de résultat, et déterminant (217) si mettre à jour une liste d'utilisateur de chiffrement selon le résultat de la destruction à distance de clé ;
G13, le KDC retournant (217) une réponse d'accusé de réception de résultat au PDS via le serveur d'authentification PTT.

9. Système de répartition Push To Talk, PTT, pour réaliser une destruction à distance de clé pour un terminal, comprenant un serveur de station de répartition, un serveur de système de répartition, et un centre de distribution de clé, KDC ;
**caractérisé en ce que** le serveur de station de répartition est configuré pour initier une demande de destruction à distance de clé pour un certain terminal PTT ; le serveur de système de répartition est configuré pour obtenir et interroger une information d'appel en correspondance avec le terminal PTT selon la demande de destruction à distance de clé afin d'établir une voie d'appel avec le terminal PTT ; le KDC est configuré pour générer une instruction de destruction à distance de clé pour détruire un module de chiffrement du terminal PTT ; et le serveur de système de répartition est en outre configuré pour envoyer l'instruction de destruction à distance de clé au terminal PTT.

10. Système de répartition PTT selon la revendication 9, **caractérisé en ce que** le serveur de système de répartition comprend un serveur de répartition PTT, PDS, et un serveur d'authentification PTT ; le PDS est configuré pour envoyer une demande pour obtenir une information d'appel au certain terminal PTT selon la demande de destruction à distance de clé, recevoir une information d'appel retournée par le serveur d'authentification PTT, et établir une voie d'appel selon l'information d'appel ; le PDS est en outre configuré pour envoyer une demande pour obtenir une instruction de destruction à distance de clé au KDC via le serveur d'authentification PTT ; et le KDC est configuré pour retourner l'instruction de destruction à distance de clé au PDS via le serveur d'authentification PTT.
